# EUROPÄISCHE PATENTSCHRIFT

(11) **EP 3 912 308 B1**
(45) Veröffentlichungstag und Bekanntmachung des Hinweises auf die Patenterteilung: **02.10.2024**
(21) Anmeldenummer: 20705018.8
(22) Anmeldetag: 07.02.2020
(51) Int. Cl.: H04L 41/082, H04L 41/022, H04L 41/28, H04L 67/00, H04L 67/12, G06F 8/65, B66C 13/48, E02F 9/20, H04L 9/40

(54) **VORRICHTUNG UND VERFAHREN ZUM STEUERN UND/ODER KONFIGURIEREN EINER BAUMASCHINE**
DEVICE AND METHOD FOR CONTROLLING AND/OR CONFIGURING A CONSTRUCTION MACHINE
DISPOSITIF ET PROCÉDÉ DESTINÉS À COMMANDER ET/OU À CONFIGURER UNE MACHINE DE CONSTRUCTION

(30) Priorität: 08.02.2019 DE 102019103195
(43) Veröffentlichungstag der Anmeldung: 24.11.2021
(73) Patentinhaber: Liebherr-Werk Biberach GmbH, 88400 Biberach an der Riss (DE)
(72) Erfinder: BRAMBERGER, Robert, 82293 Mittelstetten/Vogach (DE); KÖGL, Martin, 88400 Biberach an der Riß (DE)
(74) Vertreter: Thoma, Michael
(86) Internationale Anmeldenummer: PCT/EP2020/053177
(87) Internationale Veröffentlichungsnummer: WO 2020/161322

(56) Entgegenhaltungen:
- EP-A1- 2 963 613
- WO-A1-02/25438
- WO-A1-2017/174195

## Beschreibung

Die vorliegende Erfindung betrifft eine Vorrichtung sowie ein Verfahren zum Steuern und/oder Konfigurieren einer Baumaschine, deren elektronische Steuervorrichtung durch Einspielen eines Programmpakets umkonfiguriert und/oder erweitert wird, wobei das Programmpaket von einem zentralen Server bereitgestellt und/oder heruntergeladen wird, der Zugriff auf eine interne Maschinendaten-Datenbank besitzt, in der verschiedene Maschinendatensätze gespeichert werden.

Auf Baustellen eingesetzte Baumaschinen wie Krane, Bagger, Raupen, Rüttler oder Bodenfräsen besitzen üblicherweise allesamt jeweils elektronische Steuervorrichtungen, in denen Sicherheitsprogramme zur Überwachung der Standsicherheit, Traglastbegrenzung oder Neigungskontrolle implementiert sind. Beispielsweise in Turmdrehkranen umfasst die Kransteuerung eine Traglastüberwachung, die die aufgenommene Traglast und deren Ausladung bzw. das hiervon induzierte Kippmoment überwacht und den Kran gegebenenfalls stillsetzt, wenn sich der Kran einer die Standsicherheit gefährdenden Lastgrenze erreicht oder überschreitet. Bei verfahrbaren Baumaschinen wie Baggern oder Raupen ist regelmäßig eine Neigungskontrolle implementiert, die eine Schrägneigung des Geräts gegenüber der Horizontalen überwacht und bei Erreichen oder Überschreiten einer Neigungsgrenze das Gerät stillsetzt oder zumindest die Verfahrgeschwindigkeit begrenzt.

Dabei müssen die Baumaschinen und deren Steuervorrichtungen je nach Baustelle und zu errichtendem Bauwerk umgerüstet bzw. an die jeweiligen Aufgaben angepasst werden, was regelmäßig mit einer Umkonfigurierung der elektronischen Steuervorrichtung einhergeht. Kommt beispielsweise ein Turmdrehkran an sich für den Großteil der zu erledigenden Hubaufgaben auf einer Baustelle mit der normalen, standardmäßig konfigurierten Lastbegrenzungsfunktion aus und muss andererseits aber ein die maximale Traglast überschreitende Sonderhubaufgabe ausgeführt werden, ist es vorteilhaft, nicht einen entsprechend größeren Kran aufzustellen, sondern die Traglastüberwachungsfunktion, die in der elektronischen Steuervorrichtung implementiert ist, für diesen Sonderhub umzukonfigurieren, indem ein Programmpaket in die Steuervorrichtung eingespielt wird, welches beispielsweise bei begrenzten, verringerten Verfahrgeschwindigkeiten eine größere Traglast zulässt und/oder nur noch eine Bedienung durch einen sehr erfahrenen Kranführer ermöglicht, der sich durch einen Code zu identifizieren hat.

In ähnlicher Weise wird die Steuervorrichtung von Baumaschinen durch Einspielen von Programmpaketen umkonfiguriert, wenn der mechanische Rüstzustand der Baumaschine verändert wird, beispielsweise durch den Anbau zusätzlicher Anbauteile wie Baggerlöffel, Klapp- bzw. Teleskopkranspitzen, Verwendung einer variablen Abstützvorrichtung, Veränderung des Ballasts und dergleichen. Auch eine Anpassung an verschiedene Umwelteinflüsse auf der jeweiligen Baustelle ist durch Umkonfigurieren der elektronischen Steuerung durch Einspielen eines Programmpakets möglich, beispielsweise eine reduzierte Traglast und/oder reduzierte Bewegungsgeschwindigkeiten bei Aufstellorten mit regelmäßig hohen Windgeschwindigkeiten oder -verwirbelungen, oder spezielle Nachtbedienprogramme auf Baustellen mit Nachtarbeit. Auch ein miteinander verknüpftes, aufeinander abgestimmtes Betreiben mehrerer Baumaschinen für bestimmte Aufgaben auf einer Baustelle kann ein spezielles Rüsten der Baumaschinen mit einer Anpassung bzw. Umrüstung der elektronischen Steuervorrichtung erfordern, beispielsweise ein Tandemhub zweier Krane, um ein schweres oder sperriges, speziell auszurichtendes Bauteil in spezieller Ausrichtung heben zu können, beispielsweise das Rotorblatt einer Windkraftanlage.

Solche die Funktionsweise der elektronischen Steuervorrichtung, insbesondere deren Sicherheitsfunktionen, verändernde Programmpakete und die ihnen zugrundeliegenden Änderungen, Anpassungen oder Modifikationen der Baumaschine müssen derzeit üblicherweise beim Hersteller der Baumaschine angefragt, von ihm berechnet und freigegeben werden. Die Übermittlung des bereit gestellten Programmpakets erfolgt derzeit üblicherweise mittels physischer Datenträger wie CDs, DVDs oder USB-Sticks oder auch mittels Speicherkarten, wobei ergänzende Informationen natürlich über E-Mails verschickt werden. Die Programmpakete werden dann vor Ort auf der Baustelle in die elektronische Steuervorrichtung der Baumaschine eingespielt, wobei die elektronische Steuervorrichtung üblicherweise einen Mikroprozessor, der ein Programm aus einer Speichereinrichtung abarbeitet, sowie eine Schnittstelle zum Einspielen der Programmpakete umfassen kann.

Um das Versenden physischer Datenträger zu vermeiden und mit Baumaschinen effizienter kommunizieren bzw. Daten austauschen zu können, sind moderne Krane und andere Baumaschinen mit Datenübertragungseinrichtungen ausgestattet, die eine Kommunikation über das Mobilfunknetz oder einen Datenaustausch per Internet ermöglichen. Beispielsweise werden Kransteuerungen von Turmdrehkranen der Firma Wolffkran mit einem VPN-Router ausgestattet bzw. über eine Schnittstelle hiermit verbunden, um unter der Bezeichnung "Wolfflink" eine Fernwartung des Krans zu ermöglichen und hierfür Betriebs- und Stördaten von der Kransteuerung auf einen entfernt vorgesehenen Rechner zu übertragen. Ein ähnliches Teleservice-System ist von der Firma Liebherr unter der Bezeichnung "LiDAT" bekannt, welches geografische Ortungs- und Betriebsdaten browserbasiert via GPRS an ein Service-Zentrum und einen dort aufgestellten Server überträgt, von dem aus sich ein Service-Mitarbeiter auch in die Steuerung der Maschine einloggen kann, vgl. WO 2017/174195 A1 oder auch WO 02/25438 A1 und EP 2 963 613 A1.

Solche Fernwartungs- bzw. Teleservice-Systeme dienen bislang vorrangig jedoch nur dazu, an der jeweiligen Maschine gesammelte Betriebsdaten an ein Service-Zentrum zu übertragen, dort auszuwerten und von dort aus lokale Wartungsmitarbeiter auf der Baustelle unterstützen zu können. Das Einspielen von sicherheitsrelevanten Programmpaketen, die eine Steuerungsfunktion der Baumaschinen-Steuervorrichtung umkonfiguriert und in ihrer Funktionsweise abändert, gehört indes zumindest nicht zum Kernbereich solcher Teleservice-Systeme, vgl. hierzu auch Fenker, Oliver Dr.-Ing. et al. *"Datenfernübertragung und Betriebsdatenerfassung* - *Liebherr-Teleservice für Turmdrehkrane"* in Wissensportal baumaschine.de 3 (2004).

Beim Betreiben einer Baustelle kommt dabei das Problem hinzu, dass üblicherweise nicht alle auf der Baustelle verwendeten Baumaschinen vom selben Hersteller stammen, sodass Programmpakete zum Umkonfigurieren der Baumaschinen-Steuervorrichtungen nicht von einem Hersteller und dessen Fernwartungs- bzw. Service-Center und dem dort installierten Server bezogen werden können. Wenn dementsprechend verschiedene Hersteller kontaktiert sowie um entsprechende Programmpakete gebeten werden, können zwar für die Baumaschinen verschiedener Hersteller entsprechende Programmpakete bezogen werden. Dabei entsteht jedoch nicht nur per se ein hoher Handhabungsaufwand, sondern es ist kaum eine Abstimmung der verschiedenen Baumaschinen aufeinander zu erzielen, da verschiedene Hersteller aus Geheimhaltungsgründen nicht bereit sind, Kernelemente der Steuerungslogiken mit anderen Herstellern zu teilen.

Der vorliegenden Erfindung liegt daher die Aufgabe zugrunde, eine verbesserte Vorrichtung und ein verbessertes Verfahren zum Steuern und/oder Umkonfigurieren von Baumaschinen zu schaffen, die Nachteile des Standes der Technik vermeiden und letzteren in vorteilhafter Weise weiterbilden. Insbesondere soll eine vereinfachte Umkonfigurierbarkeit auch sicherheitsrelevanter Funktionen von Steuervorrichtungen von Baumaschinen ermöglicht werden, die das Betreiben einer Baustelle mit verschiedenen Baumaschinen verschiedener Hersteller vereinfacht und den Datensicherheitsinteressen verschiedener Hersteller Rechnung trägt.

Erfindungsgemäß wird die genannte Aufgabe durch eine Vorrichtung gemäß Anspruch 1 sowie ein Verfahren gemäß Anspruch 19 gelöst. Bevorzugte Ausgestaltungen der Erfindung sind Gegenstand der abhängigen Ansprüche.

Es wird also vorgeschlagen, Programmpakete für verschiedene Baumaschinen online über ein zentrales System bereitzustellen, das Programmpakete von verschiedenen, separaten Anbieter-Servern beschaffen und zusammenführen kann, dabei jedoch so ausgebildet ist, dass die separaten Anbieter-Server keinen Zugriff auf die Programmpakete anderer Anbieter-Server haben. Erfindungsgemäß ist der zentrale Server, von dem die verschiedenen Programmpakete bereitgestellt und/oder heruntergeladen werden, als offene Server-Plattform mit verschiedenen Schnittstellen zu verschiedenen, externen Anbieter-Servern ausgebildet, wobei ein Kommunikationsmodul in Abhängigkeit einer Baumaschinen- und/oder Programmpaket-Anfrage und in Abhängigkeit der Maschinendaten, die in der internen Maschinendaten-Datenbank, auf die der zentrale Server Zugriff hat, gespeichert sind, eine Schnittstelle zu einer externen Maschinendaten-Datenbank und/oder zu einem der verschiedenen, externen Anbieter-Server aktiviert, und wobei die externe, vom zentralen Server separate Maschinendaten-Datenbank dazu ausgebildet ist, ein Programmpaket eines externen Anbieter-Servers in Abhängigkeit einer Ansteuerung des externen Anbieter-Servers bereitzustellen.

Der zentrale Server ermöglicht als offene Server-Plattform die Anbindung verschiedener Anbieter-Server und die Übermittlung von Programmpaketen verschiedener Anbieter-Server an eine Baustelle und die dort aufgestellten Baumaschinen, wobei das Kommunikationsmodul anhand der jeweiligen Baumaschinen- und/oder Programmpaket-Anfrage und der Maschinendatensätze in der internen Maschinendaten-Datenbank automatisiert den richtigen, für die jeweilige Anfrage passenden Anbieter-Server selektiert und zu diesem eine Kommunikationsverbindung aufbaut. Dabei muss der externe Anbieter-Server keine Furcht um seine Datensicherheit haben, da das eventuell bereitgestellte Programmpaket nicht direkt an den zentralen Server der offenen Server-Plattform, auf die auch andere Anbieter-Server Zugriff haben, bereitgestellt wird, sondern über eine externe, vom zentralen Server separate Maschinendaten-Datenbank, auf die der zentrale Server nicht ohne weiteres Zugriff hat. Diese Struktur der Datenübermittlung erlaubt es, verschiedene Anbieter-Server und damit verschiedene Baumaschinenhersteller einzubinden, gleichzeitig aber die ungewollte freie Zugänglichkeit sensibler Steuerungsdaten zu unterbinden.

Insbesondere können auf diesem Wege auch sicherheitsrelevante Programmpakete, die Überwachungs- und/oder sicherheitsrelevante Betriebsfunktionen der Steuervorrichtung umkonfigurieren, anpassen und/oder erweitern, an eine jeweilige Baumaschine übermittelt werden, die in einer ihrer Kernfunktionen nach Online-Einspielen des von der externen Maschinendaten-Datenbank erhaltenen Programmpakets anders arbeitet als vor Einspielen des Programmpakets.

Beispielsweise wird mittels des Programmpakets, das über die offene ServerPlattform vom zuständigen Anbieter-Server angefordert wurde und über die davon separate, externe Maschinendaten-Datenbank online eingespielt wurde, eine Lastmoment-Begrenzungseinrichtung einer eingesetzten Hubvorrichtung wie Turmdrehkran, Teleskopkrans oder eines anderen Krans modifiziert. Alternativ oder zusätzlich wird mittels eines solchermaßen eingespielten Programmpakets an einem Baumaschinenfahrzeug wie Muldenkipper, Mobilkran, Erdbeweger wie Bagger oder Raupe eine Neigungsüberwachung und/oder -begrenzung modifiziert. Alternativ oder zusätzlich können variable Abstützvorrichtungen hinsichtlich ihrer Steuerung und/oder -geometrien und/oder hinsichtlich mit der jeweiligen Abstützgeometrie verbundenen Kippmomentüberwachung modifiziert werden.

Alternativ oder zusätzlich kann mit dem in der genannten Weise eingespielten Programmpaket die Steuervorrichtung einer jeweiligen Baumaschine für verschiedene Umwelteinflüsse umkonfiguriert werden, beispielsweise für verschiedene Windeinflüsse, Nachtsicht oder Schlechtwetter.

Alternativ oder zusätzlich ist das Programmpaket dazu ausgebildet, die Steuerungsfunktion der Baumaschine an einen jeweiligen Rüstzustand der Baumaschine anzupassen und/oder hierfür umzukonfigurieren, beispielsweise wechselnde Anbauteile wie Baggerlöffel bzw. -gabeln, Klapp- und/oder Teleskopkranspitzen, und/oder verschiedene Ballastelemente, Winden, und/oder Abspannkonfigurationen.

Alternativ oder zusätzlich ist das jeweils online eingespielte Programmpaket dazu vorgesehen, spezielle Betriebsfunktionen mehrerer Baumaschinen aufeinander abzustimmen, beispielsweise die Bewegungssteuerung zweier Hubvorrichtungen für Tandemhübe, und/oder die Bewegungssteuerung eines Hebezeugs wie Kran oder Seilroboter an die Förder- und/oder Austragssteuerung eines 3D-Druckers und/oder einer Betonpumpe anzupassen.

In vorteilhafter Weiterbildung der Erfindung wird dabei ein Planungsmodul vorgesehen, welches in den zentralen Server der offenen Serverplattform integriert oder Teil eines daran anbindbaren Servers eines Planungsbüros oder eines anderen externen Beteiligten sein kann, welches Planungsmodul ein an einer Baumaschine für die jeweilige Baustelle jeweils benötigtes Programmpaket automatisiert bestimmt. Insbesondere kann ein solches Planungsmodul dazu konfiguriert sein, Projektdaten der Baustelle, an der die Baumaschine eingesetzt werden soll, aus einem BIM-Server, also einem Bauwerk-Informations-Modell, in dem die verschiedenen Projektdaten zu einer Baustelle zusammengefasst sind, mit den in der internen Maschinendaten-Datenbank gespeicherten Maschinendatensätzen abzugleichen und anhand des Abgleichs zu bestimmen, ob die an der jemals verwendeten Baumaschine vorgesehenen Steuerungsfunktionen ausreichend sind oder ob ein zusätzliches, spezielles Programmpaket für die Baumaschine benötigt wird, um die an der Baustelle anfallenden Aufgaben ausführen zu können. Das genannte Planungsmodul kann dabei beispielsweise die im BIM gespeicherten Projektdaten hinsichtlich Bauwerksdaten wie Geometrie und/oder Gewicht von zu versetzenden und/oder zu hebenden Bauwerksteilen, oder hinsichtlich Umgebungsdaten wie beispielsweise der Neigung von Zufahrtsrampen, der Windsituation am Baustellenort oder hinsichtlich geplanter Arbeitsabläufe wie Nachtschichten analysieren und mit den gespeicherten Maschinendatensätzen der jeweiligen Baumaschine abgleichen, um zu bestimmen, ob die jeweilige Baumaschine durch Einspielen eines Programmpakets umkonfiguriert und/oder erweitert werden muss, beispielsweise für einen Sonderhub besonders hoher Last, eine reduzierte Windbetriebsschwelle für kritische Windsituationen oder reduzierte Bewegungsgeschwindigkeiten bei besonders steilen Zufahrtsrampen. Ermittelt das Planungsmodul den Bedarf für ein bestimmtes Programmpaket, generiert das genannte Programmmodul vorteilhafterweise automatisiert die zuvor genannte Baumaschinen- und/oder Programmpaket-Anfrage, anhand derer dann das Kommunikationsmodul die Schnittstelle zum für das Programmpaket zuständigen Anbieter-Server aktiviert und das Programmpaket dort anfordert.

Das in Abhängigkeit einer jeweiligen Anfrage über die externe Maschinendaten-Datenbank bereitgestellte Programmpaket kann dabei in vorteilhafter Weiterbildung der Erfindung mit einer zeitlichen und/oder geografischen Nutzungsbeschränkung, insbesondere in Form einer nutzungsbeschränkenden Kodierung versehen werden, um die Nutzbarkeit des eingespielten Programmpakets zeitlich und/oder geografisch zu beschränken. Beispielsweise kann vom jeweils aktivierten Anbieter-Server und/oder vom zentralen Server der Server-Plattform und/oder von dem zuvor genannten Planungsmodul in Abhängigkeit von Projektdaten aus dem genannten BIM-Server eine zeitliche Verfallskodierung und/oder eine geografische Nutzungskodierung beispielsweise in Form von GPS-Koordinaten der Baustelle generiert und mit dem Programmpaket verknüpft werden.

Eine solche zeitliche und/oder geografische Nutzungsbeschränkung bzw. eine zeitliche und/oder geografische Nutzungserlaubnis beispielsweise in Form einer freischaltenden und/oder nutzungsermöglichenden Codierung muss dabei nicht an Programmpakete gebunden sein, die in der beschriebenen Weise in Abhängigkeit einer Anfrage über die externe Maschinendaten-Datenbank bereitgestellt wurde, sondern kann auch in vorteilhafter Weise für vorinstallierte Programmpakete übermittelt und/oder eingespielt werden. Beispielsweise kann ein bestimmtes Programmpaket an einer auf der Baustelle verwendeten Baumaschine vorinstalliert, jedoch zeitlich und/oder geografisch nutzungsbeschränkt sein, beispielsweise herstellerseitig standardmäßig blockiert sein. Wird das solchermaßen nutzungsbeschränkt vorinstallierte Programmpaket benötigt, kann eine nutzungserlaubende Codierung, die eine zeitlich und/oder geografisch limitierende Konfigurierung haben kann, in Abhängigkeit einer jeweiligen Anfrage vorzugsweise über die genannte externe Maschinendatenbank übermittelt werden. Beispielsweise kann vom jeweils aktivierten Anbieterserver und/oder vom zentralen Server der Serverplattform und/oder von dem zuvor genannten Planungsmodul in Abhängigkeit von Projektdaten aus dem genannten BIM-Server eine beispielsweise zeitlich beschränkte und/oder beispielsweise für ein bestimmtes geografisches Gebiet geltende Nutzungserlaubnis generiert und/oder übermittelt und/oder eingespielt werden.

Insbesondere kann das Programmpaket abhängig von der jeweils generierten Anfrage und/oder abhängig von Projektdaten aus dem BIM automatisiert dazu konfiguriert werden, nach Einspielen in die jeweilige Baumaschinen-Steuervorrichtung aktuelle Standort- bzw. Geografiedaten und/oder Datumsdaten abzufragen und mit der Nutzungsbeschränkungs-Kodierung abzugleichen, um in Abhängigkeit des Abgleichs ein Freischalten und/oder ein Stillsetzen des Programmpakets zu bewirken.

Beispielsweise kann die an einen jeweiligen Anbieterserver übermittelte Programmpaket-Anfrage mit geografischen und/oder zeitlichen Projektdaten aus dem BIM verknüpft werden, sodass der Anbieter-Server weiß, wo und wann das Programmprodukt benutzt werden soll, woraufhin der Anbieterserver und/oder der zentrale Server der Server-Plattform die entsprechende Nutzungsbeschränkung implementieren kann.

Die Übermittlung des Programmpakets an die jeweilige Baumaschine kann grundsätzlich auf verschiedenem Wege erfolgen. Vorteilhafterweise wird das Programmpaket, das vom jeweiligen externen Anbieter-Server an die externe Maschinendaten-Datenbank übermittelt wurde oder in der externen Maschinendaten-Datenbank bereits gespeichert und vom externen Anbieter-Server freigeschaltet wurde, von dem genannten externen Maschinendaten-Datenbank direkt an die jeweilige Baumaschine oder einen damit verbundenen, lokalen auf der Baustelle vorgesehenen Baustellenserver übermittelt.

Weiterhin kann ein von einem externen Anbieter-Server angefragtes Programmpaket auch direkt von dem genannten Anbieter-Server an den lokalen Baustellenserver oder die an der Baustelle befindliche Baumaschine übermittelt werden.

Eine solche direkte oder in anderer Weise an dem zentralen Server vorbeigehende Übermittlung eines Programmpakets ist vorteilhafterweise dennoch der Kontrolle durch den zentralen Server unterstellt. Beispielsweise kann der Übermittlungsweg blockiert werden, bis von dem zentralen Server eine Freigabe für die Übermittlung gegeben wird. Beispielsweise kann eine Einspielschnittstelle an der Baumaschine und/oder ein mit der Baumaschine kommunizierender Baustellenserver gegen den Empfang von Programmpaketen von dritter Seite blockiert sein und/oder bei Empfang eines Programmpakets von einem externen Anbieter einen Freigabecode abfragen und/oder auf einen Freigabecode warten, der von dritter Seite, beispielsweise dem zentralen Server und/oder dem BIM-Server übermittelt wird. Erst bei Empfang eines passenden Freischalt- und/oder Übermittlungscodes wird dann das Einspielen und/oder die Übermittlung des von anderer Seite her kommenden Programmpakets freigegeben.

Um die Datensicherheit zu erhöhen und unerlaubten Zugriff auf bestimmte Programmpakete zu verhindern, kann die genannte externe Maschinendaten-Datenbank vom zentralen Server der offenen Serverplattform einerseits und von dem externen, jeweils angefragten Anbieterserver oder jedem externen Anbieterserver andererseits durch verschieden konfigurierte Verschlüsselungsmodule abgegrenzt sein. Die genannten Verschlüsselungsmodule können dabei Firewalls bilden, die vorteilhafterweise unterschiedlich konfiguriert sein können, insbesondere unterschiedliche Verschlüsselungstypen und/oder -codes verwenden, um eine Kommunikation über die externe Maschinendatenbank hinweg beispielsweise zwischen dem zentralen Server und einem jeweiligen Anbieter-Server verlässlich zu verhindern.

Beispielsweise kann das Verschlüsselungsmodul zwischen externer Maschinendaten-Datenbank und dem zentralen Server der offenen Server-Plattform dazu konfiguriert sein, einen mit einem Programmpaket verknüpften Autorisierungscode abzufragen, um zu prüfen, ob der zentrale Server den Autorisierungscode des in der externen Maschinendaten-Datenbank abgelegten Programmpakets kennt und berechtigt ist, das genannte Programmpaket abzurufen.

Alternativ oder zusätzlich kann das Verschlüsselungsmodul zwischen der externen Maschinendaten-Datenbank und dem externen Anbieter-Server dazu konfiguriert sein, eine von dem externen Anbieter-Server übermittelten Autorisierungscode mit einem von der externen Maschinendaten-Datenbank bereitgestellten Code miteinander abzugleichen, um zu überprüfen, ob der jeweilige Anbieterserver berechtigt Zugriff auf die externe Maschinendaten-Datenbank nehmen kann.

Vorteilhafterweise sind dabei zwischen der externen Maschinendaten-Datenbank einerseits und den mehreren Anbieter-Servern andererseits jeweils verschieden konfigurierte Verschlüsselungsmodule vorgesehen. Um mit den verschiedenen Anbieter-Servern über die verschieden konfigurierten Verschlüsselungsmodule hinweg kommunizieren zu können, können in der externen Maschinendaten-Datenbank verschiedene Codes zum Zugang verschiedener externer Anbieter-Server bereitgehalten werden, wobei dann je nachdem, welche Kommunikationsschnittstelle von dem Kommunikationsmodul aktiviert wurde bzw. welcher Anbieter-Server vom Kommunikationsmodul angesprochen wurde, die entsprechende Codierung ausgewählt und mit der vom kommunizierenden Anbieter-Server übersandten Codierung abgeglichen wird.

Das genannte Kommunikationsmodul kann dabei auf einer von dem zentralen Server und den externen Anbieter-Servern verschiedenen Hierarchie-Ebene ausgebildet sein und dazu konfiguriert sein, den Zugriff der Baumaschinen einer Baustelle bzw. eines an der Baustelle vorgesehenen lokalen Baustellen-Servers auf den zentralen Server sowie den Zugriff der externen Anbieter-Server auf die externe Maschinendaten-Datenbank zu steuern. Beispielsweise kann das genannte Kommunikationsmodul in einer Cloud implementiert sein, über die berechtigte Baumaschinen bzw. ein berechtigter Baustellenserver auf den zentralen Server der offenen Server-Plattform zugreifen können, und gleichzeitig auch die Anbieter-Server benötigte Programmpakete an den externen Maschinendaten-Server bereitstellen oder dort gespeicherte Programmpakete freischalten können.

Vorteilhafterweise können mehrere Baumaschinen, die sich auf einer Baustelle befinden, an einen lokalen, an der Baustelle vorgesehenen Baustellen-Server angebunden sein, wobei der genannte lokale Baustellen-Server an den zentralen Server des Systems angebunden oder damit verbindbar ist. Der genannte lokale Baustellen-Server kann insbesondere dazu konfiguriert sein, einerseits von dem zentralen Server und/oder von der externen Maschinendaten-Datenbank verschiedene Programmpakete zu empfangen und andererseits verschiedenen Baumaschinen verschiedene Programmpakete bereitzustellen. Dementsprechend sieht der lokale Baustellen-Server auf einer nachgeordneten Ebene, die dem zentralen Server nachgeordnet ist, eine zentrale Datenverarbeitung und/oder Kommunikationsschnittstelle vor, bevor die Programmpakete an verschiedene Baumaschinen übermittelt werden.

Durch die Verwendung eines solchen lokalen Baustellen-Servers kann die Offenheit der einzelnen Baumaschinen hinsichtlich ihrer Anbindung an das Datenübertragungssystem zeitlich begrenzt werden, beispielsweise nur dann geöffnet werden, wenn tatsächlich ein Programmpaket in eine jeweilige Baumaschine eingespielt werden soll. Durch die Abtrennung einer jeweiligen Baumaschine von dem lokalen Baustellen-Server in Zeitphasen, in denen kein Programmpaket einzuspielen ist, kann die jeweilige Baumaschine vom System abgebunden bleiben, um unautorisierten Zugriff gänzlich zu unterbinden.

Unabhängig von der Übermittlung eines jeweiligen Programmpakets an den lokalen Baustellen-Server von der externen Maschinendaten-Datenbank oder dem zentralen Server oder einem separaten Anbieter-Server her, kann der lokale BaustellenServer vom zentralen Server her gesteuert sein, insbesondere hinsichtlich des Herunterladens eines Programmpakets und/oder des Empfangs eines Programmpakets. Beispielsweise kann vom zentralen Server aus dem lokalen Baustellen-Server angegeben werden, ein bestimmtes Programmpaket von einem bestimmten Server herunterzuladen, beispielsweise entweder vom externen Anbieter-Server oder der genannten externen Maschinendaten-Datenbank.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung einer Vorrichtung zum Steuern und Umkonfigurieren von auf einer Baustelle verwendeten Baumaschine durch Einspielen eines Programmpakets in die Steuervorrichtung der jeweiligen Baumaschine, sowie der Anbindung der Baumaschinen an die genannte Vorrichtung nach einer vorteilhaften Ausführung der Erfindung,
- Fig. 2:: eine schematische Darstellung des zentralen Servers, der daran angebundenen internen Maschinendaten-Datenbank und der mit externen Anbieter-Servern kommunizierenden externen MaschinendatenDatenbank, die als separate Untersysteme in einer Cloud implementiert sind, und
- Fig. 3:: eine schematische Darstellung der auf verschiedenen Ebenen kommunizierenden Bausteine der Vorrichtung einschließlich eines lokalen Baustellen-Servers, des zentralen Servers und der separaten AnbieterServer, sowie deren Anbindung an die Baumaschinen einer Baustelle.

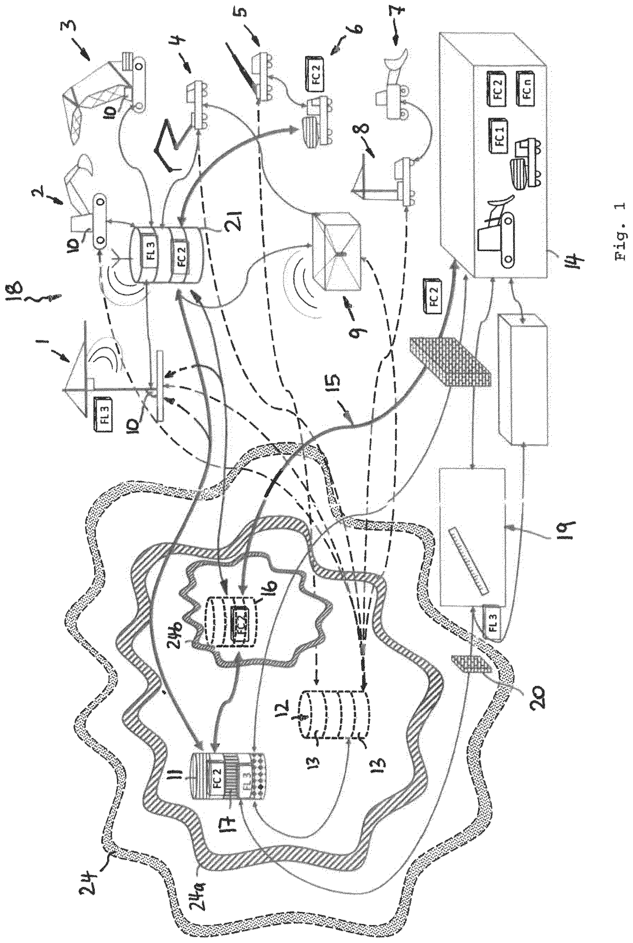

Wie Figur 1 zeigt, können auf einer Baustelle 18, auf der beispielsweise ein Gebäude oder ein anderes Bauwerk errichtet oder eine Tiefbaumaßnahme ausgeführt wird, verschiedene Baumaschinen verwendet werden, beispielsweise in Form eines Krans 1, eines Raupenbaggers 2, eines Seilbaggers 3, eines Hubladers 4, eines Teleskopierkrans 5, eines Mischerfahrzeugs 6, eines Erdbewegers 7, eines Mobilkrans 8 oder eines Seilroboters 9, wobei in an sich bekannter Weise auch andere Baumaschinentypen auf der Baustelle 18 eingesetzt sein können.

Jede der genannten Baumaschinen 1 bis 9 umfasst dabei eine elektronische Steuervorrichtung 10, die beispielsweise einen oder mehrere Mikroprozessoren umfassen kann, um in einem Programmspeicher gespeicherte Funktionsprogramme abzuarbeiten. Insbesondere kann die elektronische Steuervorrichtung 10 ein Bewegungssteuermodul zum Steuern der verschiedenen Bewegungsachsen und - antriebe umfassen, welches automatisierte Bewegungsbahnen steuern und auch manuelle Bedienelemente wie beispielsweise Joysticks und Touchscreens aufweisen kann. Ferner umfasst die elektronische Steuervorrichtung 10 insbesondere auch zumindest ein sicherheitsrelevantes Funktionsmodul, insbesondere einen Lastmomentbegrenzer und/oder einen Neigungsbegrenzer und/oder andere Bewegungsbegrenzer, die in Abhängigkeit bestimmter Betriebssituationen Bewegungen der jeweiligen Baumaschine einschränken oder abschalten können, wie dies per se an sich bekannt ist.

Wie Figur 1 weiterhin zeigt, umfasst die elektronische Steuervorrichtung 10 einer jeden Baumaschine 1 bis 9 eine Kommunikationseinrichtung beispielsweise in Form eines Funkmoduls und/oder einer USB-Schnittstelle, um mit einem auf der Baustelle 18 vorgesehenen lokalen Baustellenserver 21 zu kommunizieren, insbesondere um einerseits Betriebsdaten und/oder Maschinendaten an den lokalen Baustellenserver 21 zu übermitteln und umgekehrt Kommunikationssignale vom Baustellenserver 21 zu erhalten, insbesondere auch Programmpakete FL, FC eingespielt zu bekommen. Die Kommunikationsverbindung zwischen den Baumaschinen 1 bis 9 und dem Baustellenserver 21 kann dauerhaft oder temporär begrenzt sein, beispielsweise dadurch, dass eine jeweilige Baumaschine nur dann kommunikativ an den Baustellenserver 21 angebunden wird, wenn ein Programmpaket einzuspielen ist.

Das Einspielen solcher Programmpakete wird von einem zentralen Server 11 gesteuert, der Teil einer Cloud 24 sein bzw. darin implementiert sein kann und über die genannte Cloud 24 mit dem lokalen Baustellenserver 21 kommunizieren kann.

Der genannte zentrale Server 11 besitzt Zugriff auf eine interne Maschinendaten-Datenbank 12, in der verschiedene Maschinendatensätze 13 für verschiedene Baumaschinen gespeichert sind. Diese Maschinendatensätze 13 können verschiedene Maschinendaten zu einer jeweiligen Baumaschine 1 bis 9 enthalten, beispielsweise deren Hersteller, eine Typenidentifikation, einen Ausrüstungszustand bzw. Rüstzustand, Leistungsdaten der jeweiligen Baumaschine und/oder Daten zur Version der in der Speichereinrichtung der elektronischen Steuervorrichtung 10 vorhandenen Programmpakete.

Der zentrale Server 11 steuert dabei das Bereitstellen eines bestimmten Programmpakets FL, FC an eine jeweilige Baumaschine 1 bis 9 in Abhängigkeit einer Programmpaket- bzw. Baumaschinen-Anfrage, die die Notwendigkeit eines benötigten Programmpakets beinhalten kann. Eine solche Programmpaket- bzw. Baumaschinen-Anfrage kann an verschiedener Stelle generiert werden, beispielsweise manuell durch Eingabe am lokalen Baustellenserver 21 oder durch einen externen Server eines die Baustelle 18 koordinierenden Projektleiters. Insbesondere kann die genannte Anfrage aber auch automatisiert von einem Planungsmodul 17 generiert werden, das Zugriff auf einen BIM-Server 19 hat, in dem Projektdaten bzw. BIM-Daten gespeichert sind, die das zu errichtende Bauwerk der Baustelle 18 und/oder hierfür benötigte Arbeitsabläufe und/oder hierfür benötigte Materialien und/oder hierfür benötigte Baumaschinen beinhalten können.

Wie Figur 1 zeigt, kann der genannte BIM-Server 19 separat von dem zentralen Server 11 ausgebildet sein und vorteilhafterweise durch eine Firewall 20 von diesem separiert sein, wobei die genannte Firewall 20 vorteilhafterweise von dem zentralen Server 11 gesteuert und/oder koordiniert werden kann. Wie Figur 1 zeigt, kann der genannten BIM-Server 19 auch gegenüber dem Anbieterserver 14 durch eine Firewall separiert sein. Unabhängig hiervon kann der BIM-Server 19 auch außerhalb der genannten Cloud 24, in der der zentrale Server 11 und/oder die Maschinendatenbanken 12 und 16 implementiert sein können, vorgesehen bzw. ausgebildet sein.

Alternativ zu einer solchen externen Ausbildung des BIM-Servers 19 kann der genannte BIM-Server 19 aber auch in dem zentralen Server 11 implementiert sein, beispielsweise als ein Funktionsbaustein des genannten zentralen Servers 11. Eine solche interne, das heißt in dem zentralen Server 11 und/oder der inneren Cloud 24a vorgesehenen Ausbildung des BIM-Servers 19 kann insbesondere dann vorteilhaft sein, wenn es sich um einen kleineren Baustellen- und/oder Projektbetreiber handelt, der keinen eigenen BIM-Server bereithält und/oder einen leistungsergänzenden, zusätzlichen BIM-Server benötigt.

Das genannte Planungsmodul 17, das in einem Server des externen Projektleiters oder auch im zentralen Server 11 implementiert sein kann, kann Maschinendatensätze 13, die die an der Baustelle 18 vorhandenen Baumaschinen 1 bis 9 kennzeichnen und beispielsweise in der vorgenannten internen Maschinendaten-Datenbank 12 gespeichert sein können, mit den genannten Projektdaten in dem BIM-Server 19 abgleichen, um anhand des Abgleichs zu bestimmen, ob und welche zusätzlichen Programmpakete FL, FC benötigt werden. Das Planungsmodul 17 generiert dann gegebenenfalls eine entsprechende Anfrage, anhand derer dann der zentrale Server 11 das Bereitstellen des benötigten Programmpakets steuern kann.

Wie Figur 1 zeigt, kann der genannte BIM-Server 19 und/oder der Server des externen Projektleiters von dem in der Cloud 24 implementierten zentralen Server 11 durch ein Verschlüsselungsmodul 20 im Sinne einer Firewall abgetrennt sein, um nur autorisierten Zugriff zu gestatten.

Anhand einer generierten Programmpaket- bzw. Baumaschinen-Anfrage kann der zentrale Server 11 anhand der Maschinendatensätze 13 den Anbieter-Server 14 identifizieren und kontaktieren, um das benötigte Programmpaket anzufordern. Wie Figur 1 zeigt, kann auch zwischen dem jeweiligen externen Anbieter-Server 14 und dem zentralen Server 11 ein Verschlüsselungsmodul 23 vorgesehen sein, um nur autorisierten Zugriff zu gestatten.

In Abhängigkeit einer erhaltenen Anfrage stellt der externe Anbieter-Server 14 das jeweilige Programmpaket FL bzw. FC an eine externe Maschinendaten-Datenbank 16 bereit, die ebenfalls in einer Cloud 24a bzw. in derselben Cloud 24b wie der zentrale Server 11 implementiert sein kann. Gegebenenfalls kann das benötigte Programmpaket FL oder FC auch bereits in der externen Maschinendaten-Datenbank 16 gespeichert sein, sodass in diesem Fall von dem externen AnbieterServer 14 lediglich eine Freigabe an die externe Maschinendaten-Datenbank 16 übermittelt wird.

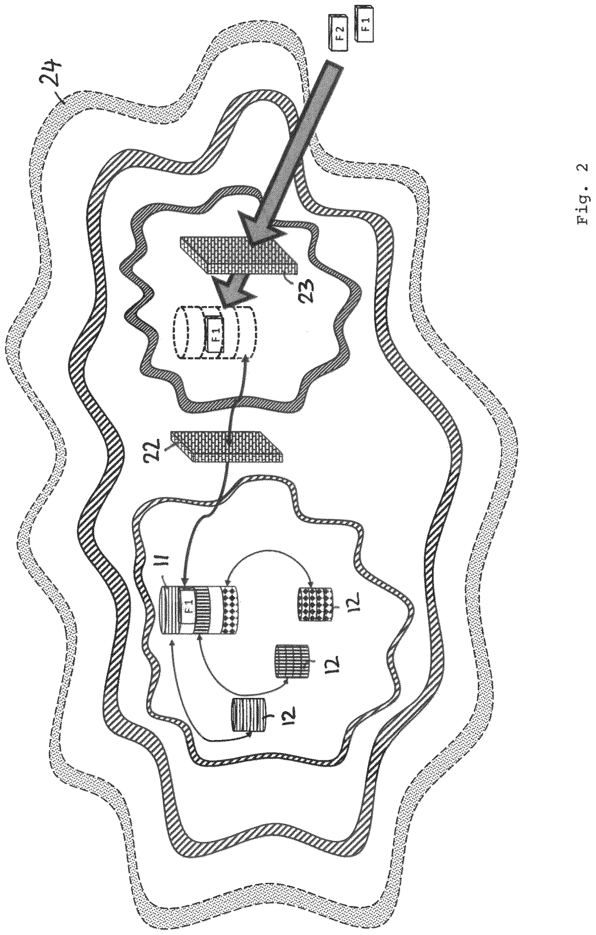

Wie die Figuren 1 und 2 verdeutlichen, kann die zuvor genannte Cloud 24 nach Art von Zwiebelschalen verschiedene Cloud-Abschnitte umfassen, beispielsweise den in Figur 1 gezeigten inneren Cloud-Abschnitt 24a, in dem der zentrale Server, die interne Maschinendatenbank 12 und die externe Maschinendatenbank 16 implementiert sein können, wobei wiederum innerhalb der genannten inneren Cloud 24a eine nochmals weiter innen liegende Cloud 24b abgetrennt oder eigenständig ausgebildet sein kann, in welcher der externe Maschinendatenbankteil 16 implementiert ist. Die genannte innere Cloud 24a kann beispielsweise ein abtrennbarer Teil einer größeren, beispielsweise kommerziellen Cloud sein.

Alternativ kann in vorteilhafter Weise aber auch mit separaten, eigenständigen Clouds gearbeitet werden, in denen separate Server und/oder Datenbanken implementiert sind. Beispielsweise kann die gezeigte zentrale bzw. innere Cloud 24a eine eigenständig ausgebildete Cloud sein, die nicht Teil einer größeren Cloud 24 ist. Unabhängig hiervon kann auch die Cloud 24b, in der die externe Maschinendaten-Datenbank 16 implementiert ist, als separate, eigenständige Cloud ausgebildet sein, die von der zuvor genannten Cloud 24a unabhängig und separat ausgebildet ist.

Wie Figur 2 zeigt, ist die genannte externe Maschinendaten-Datenbank 16 von dem zentralen Server 11 und auch der internen Maschinendaten-Datenbank 12 durch ein Verschlüsselungsmodul 22 separiert, um nur einen autorisierten und gegebenenfalls beschränkten Zugriff zu gestatten. Andererseits ist die externe Maschinendaten-Datenbank 16 auch von den externen Anbieter-Servern 14 durch eine Firewall bzw. ein Verschlüsselungsmodul 23 separiert, vgl. Figur 2.

Die genannten Verschlüsselungsmodule 22 und 23 können vorteilhafterweise unterschiedlich konfiguriert sein, um eine Kommunikation über die externe Maschinendaten-Datenbank 16 hinweg weiter abzusichern.

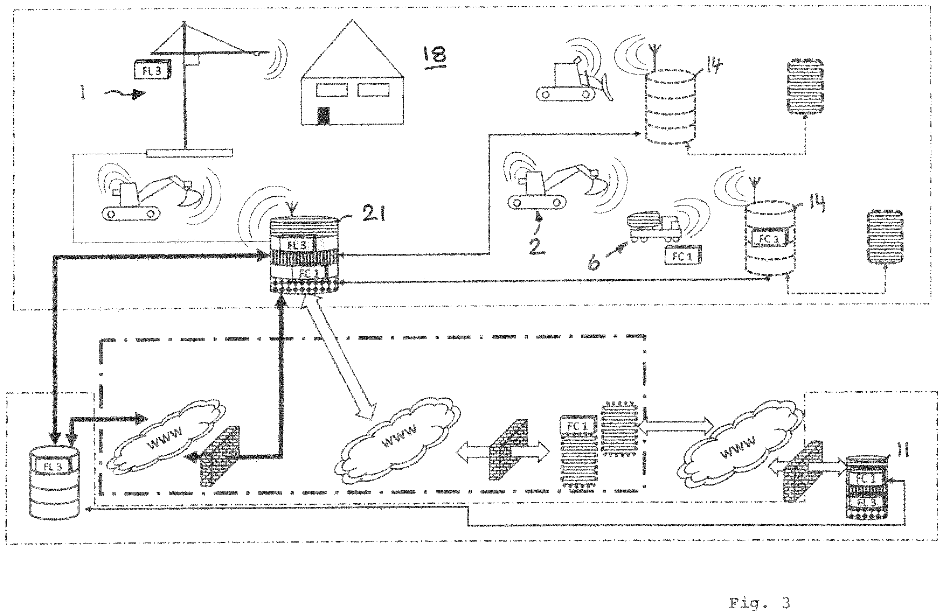

Wie die Figuren 1 bis 3 zeigen, können in der externen Maschinendaten-Datenbank 16 verschiedene Programmpakete, die von einem Anbieter-Server 14 herkommen, zwischengespeichert werden. Vorteilhafterweise können auch mehrere externe Maschinendaten-Datenbanken 16 Verwendung finden, in denen jeweils nur Programmpakete von einem Anbieter-Server 14 gespeichert werden, sodass jeder Anbieter-Server 14 seine eigene externe Maschinendaten-Datenbank 16 besitzt, wobei diese mehreren externen Maschinendaten-Datenbanken vorteilhafterweise auch in separaten Bereichen einer Cloud oder separaten Clouds 24 implementiert sein können.

Ist ein bestimmtes Programmpaket FL bzw. FC an die externe Maschinendaten-Datenbank 16 übermittelt bzw. darin zwischengespeichert und freigeschaltet, kann das Programmpaket an den lokalen Baustellenserver 21 übermittelt werden, um von dort aus in die Steuervorrichtung 10 der jeweiligen Baumaschine eingespielt zu werden.

## Patentansprüche

1. Vorrichtung zum Steuern und/oder Konfigurieren von Baumaschinen (1 - 9), deren elektronische Steuervorrichtung (10) durch Einspielen eines Programmpakets (FL, FC) umkonfigurierbar und/oder erweiterbar ist, mit einem zentralen Server (11) zum Bereitstellen und/oder Herunterladen verschiedener Programmpakete (FL, FC), einem Kommunikationsmodul (15) sowie einer externen Maschinendaten-Datenbank (16), wobei der zentrale Server (11) Zugriff auf eine interne Maschinendaten-Datenbank (12) besitzt, in denen verschiedene Maschinendatensätze (13) gespeichert sind,
**dadurch gekennzeichnet,**
**dass** der zentrale Server (11) als offene Server-Plattform mit verschiedenen Schnittstellen zu verschiedenen externen Anbieter-Servern (14) und zu der externen Maschinendaten-Datenbank (16) ausgebildet ist, wobei der zentrale Server (11) dazu ausgebildet ist, eine Baumaschinen- und/oder Programmpaket-Anfrage zu erhalten, wobei das Kommunikationsmodul (15) in Abhängigkeit der Baumaschinen- und/oder Programmpaket-Anfrage und in Abhängigkeit der Maschinendatensätze in der internen Maschinendaten-Datenbank (12) eine Schnittstelle des zentralen Servers (11) zu der externen Maschinendaten-Datenbank (16) und/oder zu einem externen Anbieter-Server (14) aktiviert, über welche der zentrale Server (11) ein Programmpaket (FL, FC) eines externen Anbieter-Servers (14) anfordert, und wobei die externe, vom zentralen Server (11) separate Maschinendaten-Datenbank (16) mit den elektronischen Steuervorrichtungen (10) der Baumaschinen (1-9) oder mit einem damit verbindbaren, lokalen Baustellenserver (21) verbunden und dazu ausgebildet ist, ein vom zentralen Server (11) angefordertes Programmpaket (FL, FC) eines externen Anbieter-Servers (14) in Abhängigkeit einer Autorisierung des externen Anbieter-Servers (14) nur direkt der elektronischen Steuervorrichtung (10) einer Baumaschine (1-9) oder dem lokalen Baustellenserver (21) unter Umgehung des zentralen Servers (11) bereitzustellen, wobei der zentrale Server (11) dazu ausgebildet ist, der elektronischen Steuervorrichtung (10) der Baumaschine (1-9) oder dem damit verbindbaren lokalen Baustellenserver (21) einen für die Freischaltung des übermittelten Programmpakets (FL, FC) passenden Freischaltcode zu übermitteln, wobei der lokale Baustellenserver (21) an den zentralen Server (11) und/oder die externe Maschinendaten-Datenbank (16) angebunden oder damit verbindbar ist.

2. Vorrichtung nach dem vorhergehenden Anspruch, wobei die Vorrichtung einen BIM-(Bauwerk-Informations-Modell)-Server (19) umfasst oder der zentrale Server (11) dazu ausgebildet ist, Daten von einem externen BIM-Server (19) zu empfangen, wobei ein Planungsmodul (17) zum Bestimmen der an den Baumaschinen (1 - 9) einer Baustelle (18) benötigten Programmpakete vorgesehen ist, wobei das genannte Planungsmodul (17) dazu konfiguriert ist, Projektdaten aus dem BIM-Server (19) mit den in der internen Maschinendaten-Datenbank (12) gespeicherten Maschinendatensätzen (13) abzugleichen und anhand des Abgleichs zu bestimmen, ob ein zusätzliches Programmpaket (FL, FC) für eine Baumaschine (7 - 9) benötigt wird, sowie eine Baumaschinen- und/oder Programmpaket-Anfrage zu generieren.

3. Vorrichtung nach dem vorhergehenden Anspruch, wobei das Planungsmodul (17) in den zentralen Server (11) implementiert ist und der BIM-Server (19) ein extern von der offenen Server-Plattform vorgesehener Baustein ist, der von dem zentralen Server (11) durch ein Verschlüsselungsmodul (20) abgetrennt ist.

4. Vorrichtung nach einem der vorhergehenden Ansprüche, wobei das der elektronischen Steuervorrichtung (10) einer Baumaschine (1 - 9) bereitgestellte Programmpaket (FL, FC) dazu konfiguriert ist, eine die Standsicherheit und/oder Betriebssicherheit der Baumaschine überwachende Sicherheitsfunktion der elektronischen Steuervorrichtung (10) umzukonfigurieren und/oder zu erweitern.

5. Vorrichtung nach dem vorhergehenden Anspruch, wobei das Programmpaket (FL, FC) dazu konfiguriert ist, beim Einspielen in die elektronische Steuervorrichtung (10) deren Lastmomentbegrenzer und/oder deren Bewegungssteuerungsmodul zum Steuern von Maschinenbewegungen umzukonfigurieren und/oder zu erweitern.

6. Vorrichtung nach einem der vorhergehenden Ansprüche, wobei der zentrale Server (11) dazu ausgebildet ist, ein vorinstalliertes Programmpaket (FL, FC) in Abhängigkeit von Projektdaten aus einem/dem BIM-Server (19) mit einer geografischen und/oder zeitlichen Nutzungsbeschränkungs-Codierung und/oder Nutzungserlaubnis-Codierung zu versehen.

7. Vorrichtung nach dem vorhergehenden Anspruch, wobei die genannte geografische und/oder zeitliche Nutzungsbeschränkungs-Codierung dazu ausgebildet ist, nach Einspielen in die Steuervorrichtung (10) einer jeweiligen Baumaschine (1 - 9) von der Steuervorrichtung (10) aktuelle geografische Positionsdaten und/oder aktuelle Datumsdaten abzufragen und mit der Nutzungsbeschränkungs-Codierung abzugleichen und in Abhängigkeit des Abgleichs das Programmpaket (FL, FC) ganz oder teilweise freizuschalten oder ganz oder teilweise abzuschalten und/oder zu beschränken.

8. Vorrichtung nach einem der vorhergehenden Ansprüche, umfassend verschieden konfigurierte Verschlüsselungsmodule (22, 23), durch die die externe Maschinendaten-Datenbank (16) vom zentralen Server (11) einerseits und vom externen Anbieter-Server (14) andererseits abgegrenzt ist.

9. Vorrichtung nach dem vorhergehenden Anspruch, wobei das Verschlüsselungsmodul (22) zwischen der externen Maschinendaten-Datenbank (16) und dem zentralen Server (11) dazu konfiguriert ist, einen mit einem Programmpaket (FL, FC) verknüpften Autorisierungs-Code abzufragen.

10. Vorrichtung nach einem der beiden vorhergehenden Ansprüche, wobei das Verschlüsselungsmodul (23) zwischen der externen Maschinendaten-Datenbank (16) und dem externen Anbieter-Server (14) dazu konfiguriert ist, eine von dem externen Anbieter-Server (14) übermittelten Autorisierungs-Code mit einem von der externen Maschinendaten-Datenbank (16) bereitgestellten Code abzugleichen und in Abhängigkeit des Abgleichs die Kommunikation zwischen der externen Maschinendaten-Datenbank (16) und dem externen Anbieter-Server (14) freizuschalten oder zu sperren.

11. Vorrichtung nach einem der vorhergehenden Ansprüche, wobei mit der externen Maschinendaten-Datenbank (16) einerseits und verschiedenen externen Anbieter-Servern (14) andererseits jeweils verschieden konfigurierte Verschlüsselungsmodule (23) vorgesehen sind, wobei in der externen Maschinendaten-Datenbank (16) verschiedene Codes zum Freischalten des Zugangs verschiedener externer Anbieter-Server (14) bereitgehalten sind.

12. Vorrichtung nach einem der vorhergehenden Ansprüche, wobei das Kommunikationsmodul (15) auf einer von dem zentralen Server (11) und dem externen Anbieter-Server (14) verschiedenen Hierarchie-Ebene ausgebildet und dazu konfiguriert ist, den Zugriff der Baumaschinen (1 - 9) oder eines damit verbindbaren lokalen Baustellenservers (21) auf den zentralen Server (11) sowie den Zugriff der externen Anbieter-Server (14) auf die externe Maschinendaten-Datenbank (16) zu steuern.

13. Vorrichtung nach dem vorhergehenden Anspruch, wobei das Kommunikationsmodul (15) in einer Cloud implementiert ist.

14. Vorrichtung nach einem der vorhergehenden Ansprüche, wobei die Vorrichtung den lokalen Baustellenserver (21), der an den zentralen Server (11) angebunden oder damit verbindbar ist, umfasst und der lokale Baustellenserver (21) dazu konfiguriert ist, den elektronischen Steuervorrichtungen (10) verschiedener Baumaschinen (1 - 9) verschiedene Programmpakete (FL, FC) bereitzustellen und von der externen Maschinendaten-Datenbank (16) verschiedene Programmpakete (FL, FC) zu empfangen.

15. Vorrichtung nach dem vorhergehenden Anspruch, wobei der lokale Baumaschinen-Server (21) dazu ausgebildet ist, Programmpakete (FL, FC) von dem zentralen Server (11) zu empfangen.

16. Vorrichtung nach einem der vorhergehenden Ansprüche, wobei das von dem externen Anbieter-Server (14) übermittelte und/oder in der externen Maschinendaten-Datenbank (16) zwischengespeicherte Programmpaket (FL, FC) mit einer Baumaschinencodierung versehen ist, anhand derer die externe Maschinendaten-Datenbank (16) das Programmpaket (FL, FC) einer bestimmten Baumaschine (1 - 9) und/oder einem bestimmten lokalen Baustellenserver (21) zur Übermittlung an eine elektronische Steuervorrichtung (10) einer bestimmten Baumaschine (1 - 9) bereitstellt.

17. Verfahren zum Steuern und/oder Konfigurieren einer Baumaschine (1 - 9), deren elektronische Steuervorrichtung (10) durch Einspielen eines Programmpakets (FL, FC) umkonfiguriert und/oder erweitert wird, wobei ein zentraler Server (11) zum Bereitstellen und/oder Herunterladen verschiedener Programmpakete (FL, FC) in Abhängigkeit einer Baumaschinen- und/oder Programmpaket-Anfrage, die der zentrale Server (11) erhält, sowie in Abhängigkeit von Maschinendatensätzen (13), die in einer internen Maschinendaten-Datenbank (12) gespeichert werden und dem zentralen Server (11) bereitgestellt werden, das Bereitstellen und/oder Herunterladen eines bestimmten Programmpakets (FL, FC) gesteuert wird,
**dadurch gekennzeichnet,**
**dass** an den zentralen Server (11) über verschiedene Schnittstellen des zentralen Servers (11) verschiedene externe Anbieter-Server (14) und eine externe Maschinendaten-Datenbank (16) angebunden werden, wobei von einem Kommunikationsmodul (15) in Abhängigkeit der jeweiligen Baumaschinen- und/oder Programmpaket-Anfrage und in Abhängigkeit der Maschinendatensätze in der internen Maschinendaten-Datenbank (12) über eine der genannten Schnittstellen eine Kommunikationsverbindung zu einer externen Maschinendaten-Datenbank (16) und/oder zu einem externen Anbieter-Server (14) aufgebaut wird, über welche der zentrale Server (11) ein Programmpaket (FL, FC) eines externen Anbieter-Servers (14) anfordert, und wobei ein von einem externen Anbieter-Server (14) durch den zentralen Server (11) angefordertes Programmpaket (FL, FC), das der separaten Maschinendaten-Datenbank (16) von dem externen Anbieter-Server (14) übermittelt oder in der separaten Maschinendaten-Datenbank (16) gespeichert und von dem externen Anbieter-Server (14) freigeschaltet wird, über die separate Maschinendaten-Datenbank (16), welche mit den elektronischen Steuervorrichtungen (10) der Baumaschinen (1-9) oder mit einem damit verbindbaren, lokalen Baustellenserver (21) verbunden ist, zur Übermittlung direkt an die elektronische Steuervorrichtung (10) einer Baumaschine (1 - 9) oder den lokalen Baustellenserver (21) in Abhängigkeit einer Autorisierung des externen Anbieter-Servers (14) unter Umgehung des zentralen Servers (11) bereitgestellt wird, wobei von dem zentralen Server (11) ein für das Freischalten des übermittelten Programmpakets (FL, FC) passender Freischaltcode an die elektronische Steuervorrichtung (10) der Baumaschine (1-9) oder den damit verbindbaren lokalen Baustellenserver (21) übermittelt wird, wobei der lokale Baustellenserver (21) an den zentralen Server (11) und/oder die externe Maschinendaten-Datenbank (16) angebunden oder damit verbindbar ist.

18. Verfahren nach dem vorhergehenden Anspruch, wobei durch Einspielen des übermittelten Programmpakets (FL, FC) in die elektronische Steuervorrichtung (10) eine sicherheitsüberwachende Funktion der Steuervorrichtung (10), insbesondere ein in der Steuervorrichtung (10) implementierter Lastmomentbegrenzer und/oder Lastbegrenzer und/oder Neigungsbegrenzer, umkonfiguriert wird.

## Claims

1. A device for controlling and/or configuring construction machines (1 - 9), whose electronic control device (10) can be reconfigured and/or extended by installing a program packet (FL, FC), comprising a central server (11) for providing and/or downloading different program packets (FL, FC), a communications module (15) and an external machine data database (16), wherein the central server (11) has access to an internal machine data database (12) in which different machine data sets (13) are stored,
**characterized in that**
the central server (11) is configured as an open server platform with different interfaces to different external host servers (14) and to the external machine data database (16), wherein the server (11) is configured to obtain a construction machine and/or program packet request, wherein the communications module (15) activates an interface to the external machine data database (16) and/or to an external host server (14) according to a construction machine and/or program packet request and according to the machine data sets in the internal machine data database (12), via which the central server (11) requests a program packet (FL, FC) of an external host server (14) according to an authorization of the external host server (14)., and wherein the external machine data database (16) that is separate from the central server (11) is connected or connectable to the central control devices (10) of the construction machines (1-9) or with a local construction site server (21) connectable thereto to the central server (11) and configured to provide a program packet (FL, FC) of an external host server (14) requested by the central server (11) only directly to the electronic control device (10) of a construction machine (1-9) or to the local construction site server (21), bypassing the central server (11), depending on an authorization of the external host server (14), wherein the central server (11) is configured to provide an activation code suitable for activating the transmitted program packet (FL, FC) to the electronic control device (10) of the construction machine (1-9) or to the local construction site server (21) which can be connected thereto, wherein the local construction site server (21) is linked to the central sever (11) and/or the external machine data database (16) or can be connected thereto.

2. The device according to the preceding claim, wherein the device comprises a BIM (Building Information Model) server (19) or the central server (11) is configured to receive data from an external BIM server (19), wherein a planning module (17) is provided for determining the program packets required at the construction machines (1 - 9) of a construction site (18), wherein the planning module (17) is configured to compare project data from the BIM server (19) with the machine data records (13) stored in the internal machine data database (12) and to use the comparison to determine whether an additional program packet (FL, FC) is required for a construction machine (7 - 9) and to generate a construction machine and/or program packet request.

3. The device according to the preceding claim, wherein the planning module (17) is implemented in the central server (11) and the BIM server (19) is a module provided externally from the open server platform, which is separated from the central server (11) by an encryption module (20).

4. The device according to one of the preceding claims, wherein the program packet (FL, FC) provided to the electronic control device (10) of a construction machine (1 - 9) is configured to reconfigure and/or extend a safety function of the electronic control device (10) monitoring the stability and/or the operational safety of the construction machine.

5. The device according to the preceding claim, wherein the program packet (FL, FC) is configured to reconfigure and/or extend the load moment limiter thereof and/or the motion control module thereof for controlling machine motions when installed into the electronic control device (10).

6. The device according to one of the preceding claims, wherein the central server (11) is configured to provide a pre-installed program packet (FL, FC) with a geographical and/or temporal usage restriction coding and/or the usage permission coding as a function of project data from a/the BIM server (19).

7. The device according to the preceding claim, wherein said geographical and/or temporal usage restriction coding is configured to retrieve current geographical position data and/or current date data from the control device (10) of a respective construction machine (1 - 9) after installing into the control device (10) and to match it with the usage restriction coding and according to the matching to completely or partially enable or completely or partially disable and/or restrict the program packet (FL, FC).

8. The device according to one of the preceding claims, comprising differently configured encryption modules (22, 23) by which the external machine database (16) is delimited from the central server (11) on the one hand and from the external provider server (14) on the other hand.

9. The device according to the preceding claim, wherein the encryption module (22) is configured between the external machine data database (16) and the central server (11) to retrieve an authorization code associated with a program packet (FL, FC).

10. The device according to any of the two foregoing claims, wherein the encryption module (23) between the external machine data database (16) and the external host server (14) is configured to match an authorization code transmitted from the external host server (14) with a code provided by the external machine data database (16) and according to the matching to enable or disable communication between the external machine data database (16) and the external host server (14).

11. The device according to any of the preceding claims, wherein differently configured encryption modules (23) are provided with the external machine data database (16) on the one hand and different external host servers (14) on the other hand, wherein different codes for unlocking the access of different external host servers (14) are kept ready in the external machine data database (16).

12. The device according to any of the preceding claims, wherein the communication module (15) is configured on a hierarchical level different from the central server (11) and the external host servers (14) and is configured to control the access of the construction machines (1 - 9) or a local construction site server (21) connectable thereto to the central server (11) and access of the external host servers (14) to the external machine data database (16).

13. The device according to the foregoing claim, wherein the communication module (15) is implemented in a cloud.

14. The device according to any of the preceding claims, wherein the device comprises the local construction site server (21) connected or connectable to the central server (11), and the local construction site server is configured to provide different program packets (FL, FC) to the electronic control devices (10) of different construction machines (1 - 9) and to receive different program packets (FL, FC) from the external machine database (16).

15. The device according to the preceding claim, wherein the local construction machine server (21) is adapted to receive program packets from the central server (11).

16. The device according to one of the preceding claims, wherein the program packet (FL, FC) transmitted by the external host server (14) and/or temporarily stored in the external machine database (16) is provided with a construction machine encoding, by means of which the external machine database (16) provides the program packet (FL, FC) to a specific construction machine (1 - 9) and/or to a specific local construction site server for transmission to an electronic control device (10) of a specific construction machine (1 - 9).

17. A method for controlling and/or configuring a construction machine (1 - 9), the electronic control device (10) of which is reconfigured and/or extended by installing a program packet (FL, FC), wherein a central server (11) for providing and/or downloading various program packets (FL, FC) in dependence on a construction machine and/or program packet request which the central server (11) receives, as well as in dependence on machine data records (13) which are stored in an internal machine data database (12) and provided to the central server (11), which the central server (11) receives, and in dependence on machine data records (13) which are stored in an internal machine data database (12) and are provided to the central server (11), the provision and/or downloading of a specific program packet (FL, FC) is controlled,
**characterized in that**
various external provider servers (14) and an external machine database (16) are connected to the central server (11) via various interfaces of the central server (11), wherein a communication module (15) establishes a communication connection to an external machine database (16) and/or to an external provider server (14) via one of the said interfaces depending on the respective construction machine and/or program package request and depending on the machine data records in the internal machine database (12), via which the central server (11) requests a program package (FL, FC) from an external provider server (14), and wherein a program package (FL, FC) requested from an external provider server (14) by the central server (11), which is transmitted to the separate machine data database (16) by the external provider server (14) or stored in the separate machine data database (16) and enabled by the external provider server (14), is transmitted via the separate machine data database (16), which is connected to the electronic control devices (10) of the construction machines (1-9) or to a local construction site server (21) connectable thereto, for direct transmission to the electronic control device (10) of a construction machine (1-9) or the local construction site server (21) in dependence on an activation of the external provider server (14), bypassing the central server (11), wherein an activation code suitable for activating the transmitted program package (FL, FC) is transmitted to the electronic control device (10) of the construction machine (1-9) or to the local construction site server (21) which can be connected thereto, wherein the local construction site server (21) is connected to the central server (11) and/or the external machine data database (16) or can be connected thereto.

18. The method according to the preceding claim, wherein a safety-monitoring function of the control device (10), in particular a load moment limiter and/or load limiter and/or tilt limiter implemented in the control device (10), is reconfigured by installing the transmitted program packet (FL, FC) into the electronic control device (10).

## Revendications

1. Dispositif destiné à commander et/ou à configurer des machines de construction (1 - 9), dont le dispositif de commande (10) électronique peut être reconfiguré et/ou étendu en enregistrant un prologiciel (FL, FC), avec un serveur central (11) destiné à fournir et/ou à télécharger différents prologiciels (FL, FC), un module de communication (15) ainsi qu'une base de données externe de données de machine (16), dans lequel le serveur central (11) a un accès à une base de données interne de données de machine (12), dans lesquelles différents jeux de données de machine (13) sont stockés,
**caractérisé en ce que**
le serveur central (11) est réalisé en tant que plateforme de serveur ouverte avec différentes interfaces vers différents serveurs de fournisseurs externes (14) et vers la base de données externe de données de machine (16), dans lequel le serveur central (11) est réalisé pour obtenir une demande de machine de construction et/ou de prologiciel, dans lequel le module de communication (15) active, en fonction de la demande de machine de construction et/ou de prologiciel et en fonction des jeux de données de machine, dans la base de données interne de données de machine (12), une interface du serveur central (11) avec la base de données externe de données de machine (16) et/ou avec un serveur de fournisseur externe (14), par l'intermédiaire de laquelle le serveur central (11) demande un prologiciel (FL, FC) d'un serveur de fournisseur externe (14), et dans lequel la base de données externe de données de machine (16) séparée du serveur central (11) est reliée aux dispositifs de commande (10) électroniques des machines de construction (1 - 9) ou à un serveur de chantier (21) local pouvant y être relié et est réalisée pour fournir un prologiciel (FL, FC), demandé par le serveur central (11), d'un serveur de fournisseur externe (14) en fonction d'une autorisation du serveur de fournisseur externe (14) seulement directement au dispositif de commande électronique (10) d'une machine de construction (1 - 9) ou au serveur de chantier local (21) en contournant le serveur central (11), dans lequel le serveur central (11) est réalisé pour transmettre au dispositif de commande électronique (10) de la machine de construction (1 - 9) ou au serveur de chantier local (21) pouvant y être relié un code de déverrouillage adapté pour le déverrouillage du prologiciel (FL, FC) transmis, dans lequel le serveur de chantier local (21) est rattaché au serveur central (11) et/ou à la base de données externe de données de machine (16) ou peut y être relié.

2. Dispositif selon la revendication précédente, dans lequel le dispositif comprend un serveur BIM [de modélisation d'informations d'ouvrage de construction] (19) ou le serveur central (11) est réalisé pour recevoir des données d'un serveur BIM externe (19), dans lequel le module de planification (17) est prévu pour définir les prologiciels requis sur les machines de construction (1 - 9) d'un chantier (18), dans lequel ledit module de planification (17) est configuré pour comparer des données de projet provenant du serveur BIM (19) aux jeux de données de machine (13) stockés dans la base de données interne de données de machine (12) et pour définir à l'aide de la comparaison si un prologiciel (FL, FC) supplémentaire est nécessaire pour une machine de construction (7 - 9) ainsi que pour générer une demande de machine de construction et/ou de prologiciel.

3. Dispositif selon la revendication précédente, dans lequel le module de planification (17) est implémenté dans le serveur central (11) ou le serveur BIM (19) est un élément structurel prévu de manière externe à la plateforme de serveur ouverte, qui est isolé du serveur central (11) par un module de cryptage (20).

4. Dispositif selon l'une quelconque des revendications, dans lequel le prologiciel (FL, FC) fourni au dispositif de commande électronique (10) d'une machine de construction (1 - 9) est configuré pour reconfigurer et/ou étendre une fonction de sécurité, surveillant la stabilité et/ou la sécurité de fonctionnement de la machine de construction, du dispositif de commande électronique (10).

5. Dispositif selon la revendication précédente, dans lequel le prologiciel (FL, FC) est configuré pour reconfigurer et/ou étendre, lors de l'enregistrement dans le dispositif de commande électronique (10), le limiteur de couple de charge et/ou le module de commande de déplacement de celui-ci pour commander des déplacements de machine.

6. Dispositif selon l'une quelconque des revendications précédentes, dans lequel le serveur central (11) est réalisé pour prévoir un prologiciel (FL, FC) préinstallé en fonction de données de projet provenant d'un/du serveur BIM (19) avec un codage de restriction d'utilisation et/ou un code d'autorisation d'utilisation géographique et/ou temporel.

7. Dispositif selon la revendication précédente, dans lequel ledit codage de restriction d'utilisation géographique et/ou temporel est réalisé pour demander, après l'enregistrement dans le dispositif de commande (10) d'une machine de construction (1 - 9) respective du dispositif de commande (10) des données de position géographiques instantanées et/ou des données de date instantanées et les comparer au codage de restriction d'utilisation et déverrouiller en totalité ou en partie ou désactiver en totalité ou en partie et/ou restreindre le prologiciel (FL, FC) en fonction de la comparaison.

8. Dispositif selon l'une quelconque des revendications précédentes, comprenant des modules de cryptage (22, 23) configurés différemment, par lesquels la base de données externe de données de machine (16) est délimitée d'une part par le serveur central (11) et d'autre part par le serveur de fournisseur externe (14).

9. Dispositif selon la revendication précédente, dans lequel le module de cryptage (22) entre la base de données externe de machine (16) et le serveur central (11) est configuré pour demander un code d'autorisation combiné à un prologiciel (FL, FC).

10. Dispositif selon l'une quelconque des deux revendications précédentes, dans lequel le module de cryptage (23) entre la base de données externe de données de machine (16) et le serveur de fournisseur externe (14) est configuré pour comparer un code d'autorisation transmis par le serveur de fournisseur externe (14) à un code fourni par la base de données externe de données de machine (16) et pour déverrouiller ou verrouiller, en fonction de la comparaison, la communication entre la base de données externe de données de machine (16) et le serveur de fournisseur externe (14).

11. Dispositif selon l'une quelconque des revendications précédentes, dans lequel des modules de cryptage (23) configurés respectivement différemment sont prévus avec la base de données externe de données de machine (16) d'une part et des serveurs de fournisseurs externes (14) différents d'autre part, dans lequel différents codes pour déverrouiller l'accès de différents serveurs de fournisseurs externes (14) sont tenus prêts dans la base de données externe de données de machine (16).

12. Dispositif selon l'une quelconque des revendications précédentes, dans lequel le module de communication (15) est réalisé sur un niveau de hiérarchie différent du serveur central (11) et du serveur de fournisseur externe (14) et est configuré pour commander l'accès des machines de construction (1 - 9) ou d'un serveur de chantier local (21) pouvant y être relié sur le serveur central (11) ainsi que l'accès des serveurs de fournisseurs externes (14) sur la base de données externe de données de machine (16).

13. Dispositif selon la revendication précédente, dans lequel le module de communication (15) est implémenté dans un nuage.

14. Dispositif selon l'une quelconque des revendications précédentes, dans lequel le dispositif comprend le serveur de chantier local (21), qui est rattaché au serveur central (11) ou peut y être relié, et le serveur de chantier local (21) est configuré pour fournir aux dispositifs de commande électroniques (10) de différentes machines de construction (1 - 9) différents prologiciels (FL, FC) et pour recevoir de la base de données externe de données de machine (16) différents prologiciels (FL, FC).

15. Dispositif selon la revendication précédente, dans lequel le serveur de machine de construction local (21) est réalisé pour recevoir des prologiciels (FL, FC) du serveur central (11).

16. Dispositif selon l'une quelconque des revendications précédentes, dans lequel le prologiciel (FL, FC) transmis par le serveur de fournisseur externe (14) et/ou stocké temporairement dans la base de données externe de machine (16) est prévu avec un codage de machine de construction, à l'aide duquel la base de données externe de données de machine (16) fournit le prologiciel (FL, FC) à une machine de construction (1 - 9) définie et/ou à un serveur de chantier de construction local (21) défini pour la transmission à un dispositif de commande électronique (10) d'une machine de construction (1 - 9) définie.

17. Procédé de commande et/ou de configuration d'une machine de construction (1 - 9), dont le dispositif de commande électronique (10) est reconfiguré et/ou est étendu en enregistrant un prologiciel (FL, FC), dans lequel un serveur central (11) destiné à fournir et/ou à télécharger différents prologiciels (FL, FC) est commandé en fonction d'une demande de machine de construction et/ou de prologiciel, que le serveur central (11) reçoit, ainsi qu'en fonction de jeux de données de machine (13), qui sont stockés dans une base de données interne de données de machine (12) et sont fournis au serveur central (11), la fourniture et/ou le téléchargement d'un prologiciel (FL FC) défini sont commandés,
**caractérisé en ce que**
différents serveurs de fournisseurs externes (14) et une base de données externe de données de machine (16) sont rattachés au serveur central (11) par l'intermédiaire de différentes interfaces du serveur central (11), dans lequel est élaborée par un module de communication (15), en fonction de la demande de machine de construction et/ou de prologiciel respective et en fonction des jeux de données de machine, dans la base de données interne de données de machine (12) par l'intermédiaire d'une desdites interfaces, une liaison de communication avec une base de données externe de données de machine (16) et/ou avec un serveur de fournisseur externe (14), par l'intermédiaire de laquelle le serveur central (11) requiert un prologiciel (FL, FC) d'un serveur de fournisseur externe (14), et dans lequel un prologiciel (FL, FC) exigé d'un serveur de fournisseur externe (14) par le serveur central (11), qui est transmis par le serveur de fournisseur externe (14) à la base de données séparée de données de machine (16) ou est stocké dans la base de données séparée de données de machine (16) et est déverrouillé par le serveur de fournisseur externe (14), par l'intermédiaire de la base de données séparée de données de machine (16), laquelle est reliée aux dispositifs de commande électroniques (10) des machines de construction (1-9) ou à un serveur de chantier local (21) pouvant y être relié, pour la transmission directement au dispositif de commande (10) électronique d'une machine de construction (1 - 9) ou au serveur de chantier local (21) en fonction d'une autorisation du serveur de fournisseur externe (14) en contournant le serveur central (11), dans lequel un code de déverrouillage adapté pour le déverrouillage du prologiciel (FL, FC) transmis est transmis au dispositif de commande (10) électronique de la machine de construction (1 - 9) ou au serveur de chantier (21) local pouvant y être relié par le serveur central (11), dans lequel le serveur de chantier (21) local est rattaché au serveur central (11) et/ou à la base de données externe de données de machine (16) ou peut y être relié.

18. Procédé selon la revendication précédente, dans lequel une fonction de surveillance de sécurité du dispositif de commande (10), en particulier un limiteur de couple de charge et/ou un limiteur de charge et/ou un limiteur d'inclinaison implémenté dans le dispositif de commande (10), est reconfigurée en enregistrant le prologiciel (FL, FC) transmis dans le dispositif de commande électronique (10).
